# DEMANDE DE BREVET EUROPEEN

(11) **EP 3 553 762 A1**
(43) Date de publication de la demande: **16.10.2019**
(21) Numéro de dépôt: 19168041.2
(22) Date de dépôt: 09.04.2019
(51) Int. Cl.: G08G 1/0967, G08G 1/16

(54) **DISPOSITIF ÉLECTRONIQUE ET PROCÉDÉ DE SURVEILLANCE D'UNE ZONE D'INTERSECTION ROUTIÈRE À DESTINATION DE VÉHICULE(S) AUTOMOBILE(S) AUTONOME(S), PROGRAMME D'ORDINATEUR ASSOCIÉ**

(30) Priorité: 10.04.2018 FR 1853096
(71) Demandeur: Transdev Group, 92130 Issy les Moulineaux (FR)
(72) Inventeur: KARAOGUZ, Cem, 91120 PALAISEAU (FR)
(74) Mandataire: Lavoix

(57) **Abrégé**

Ce dispositif électronique (10) de surveillance d'une zone d'intersection routière (12) comprend un module de détection (14) configuré pour détecter, via au moins un capteur (16), au moins un élément de trafic (18) entrant dans la zone d'intersection routière (12), chaque capteur (16) étant apte à être relié au module de détection (14) et étant disposé en voirie à proximité de ladite zone d'intersection routière (12).

Le dispositif (10) comprend en outre un module de calcul (20) configuré pour calculer au moins un indicateur d'accès associé à la zone d'intersection routière (12) en fonction de la détection d'élément(s) de trafic (18) entrant dans la zone d'intersection routière (12), et un module de transmission (22) configuré pour transmettre au moins un indicateur calculé à un véhicule automobile autonome (24) en approche de la zone d'intersection routière (12).

## Description

La présente invention concerne un dispositif électronique de surveillance d'une zone d'intersection routière.

L'invention concerne aussi un procédé de surveillance d'une zone d'intersection routière, le procédé étant mis en oeuvre par un dispositif électronique de surveillance.

L'invention concerne également un programme d'ordinateur comportant des instructions logicielles qui, lorsqu'elles sont exécutées par un ordinateur, mettent en oeuvre un tel procédé de surveillance.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA). Les véhicules automobiles autonomes sont notamment des véhicules de transport, tels que des taxis, des navettes, des bus ou des autocars.

Classiquement, un véhicule automobile autonome, notamment un véhicule autonome ayant un niveau d'automatisation égal à 3, 4 ou 5 selon le barème de l'OICA est équipé d'une pluralité de capteurs et d'un ou plusieurs calculateurs couplés à ces capteurs, pour permettre par exemple au véhicule autonome de se positionner sur la chaussée et de réguler sa vitesse en fonction du trafic automobile, d'éviter une collision avec un autre véhicule ou un obstacle, de détecter un changement de trajectoire ou encore d'effectuer une manoeuvre de stationnement.

Toutefois, le franchissement d'une zone d'intersection routière par un tel véhicule autonome demeure relativement risqué, et nécessite alors des calculs complexes pour limiter les risques de collision du véhicule autonome avec un autre véhicule ou un obstacle dans la zone d'intersection routière.

Le but de l'invention est alors de proposer un dispositif électronique et un procédé associé de surveillance d'une zone d'intersection routière à destination de véhicule(s) automobile(s) autonome(s), permettant de limiter davantage les risques de collision à l'intérieur de la zone d'intersection routière, tout en nécessitant des calculs moins complexes.

A cet effet, l'invention a pour objet un dispositif électronique de surveillance d'une zone d'intersection routière, le dispositif comprenant :
- un module de détection configuré pour détecter, via au moins un capteur, au moins un élément de trafic entrant dans la zone d'intersection routière, chaque capteur étant apte à être relié au module de détection et étant disposé en voirie à proximité de ladite zone d'intersection routière,
- un module de calcul configuré pour calculer au moins un indicateur d'accès associé à la zone d'intersection routière en fonction de la détection d'élément(s) de trafic entrant dans la zone d'intersection routière, et
- un module de transmission configuré pour transmettre au moins un indicateur calculé à un véhicule automobile autonome en approche de la zone d'intersection routière.

Ainsi, le dispositif électronique de surveillance selon l'invention permet de détecter, via au moins un capteur disposé en voirie à proximité de ladite zone d'intersection routière, chaque élément de trafic entrant dans la zone d'intersection routière, puis de calculer un ou plusieurs indicateurs d'accès associés à la zone d'intersection routière en fonction de la détection ou non d'élément(s) de trafic entrant dans la zone d'intersection routière, et de transmettre au moins un indicateur calculé à un véhicule automobile autonome en approche de la zone d'intersection routière.

Le véhicule autonome en approche de ladite zone d'intersection routière est alors autorisé à entrer dans ladite zone d'intersection routière seulement s'il a reçu un indicateur d'accès respectif ayant une valeur d'accès autorisé. Autrement dit, et inversement, chaque véhicule autonome en approche de la zone d'intersection routière s'arrête avant d'entrer dans ladite zone d'intersection routière, dès qu'il reçoit un indicateur d'accès ayant la valeur accès interdit.

Suivant d'autres aspects avantageux de l'invention, le dispositif électronique de surveillance comprend une ou plusieurs des caractéristiques suivantes, prises isolément ou suivant toutes les combinaisons techniquement possibles :
- le module de calcul est configuré pour positionner chaque indicateur d'accès à une valeur d'accès autorisé tant qu'aucun élément de trafic entrant dans la zone d'intersection routière n'est détecté ;
- la zone d'intersection routière comprend plusieurs voies d'accès, et à chaque voie d'accès pour véhicule(s) automobile(s), en particulier pour véhicule(s) automobile(s) autonome(s), est associée une limite prédéfinie d'entrée dans la zone d'intersection routière, et le module de calcul est configuré pour calculer un indicateur d'accès pour chaque limite d'entrée ;
- le module de calcul est configuré pour positionner, à une valeur d'accès interdit, un indicateur d'accès associé à une limite d'entrée d'une voie respective dès la détection d'un élément de trafic positionné à l'intérieur d'une zone de détection associée à une voie sécante de ladite voie respective ;
- la zone de détection associée à une voie est une zone prédéfinie en 2 ou 3 dimensions,
de préférence en forme d'un polygone ;
- le module de transmission est configuré pour regrouper l'ensemble d'indicateur(s) calculé(s) dans un fichier commun et pour diffuser ledit fichier commun au(x) véhicule(s) automobile(s) autonome(s) en approche de la zone d'intersection routière ;
- chaque indicateur d'accès présente une valeur choisie parmi le groupe consistant en : accès interdit, accès autorisé, accès autorisé avec limitation spécifique de vitesse, accès autorisé avec indication d'un danger potentiel ; et
- chaque véhicule automobile autonome présente un niveau d'automatisation supérieur ou égal à 3 selon le barème de l'Organisation Internationale des Constructeurs Automobiles.

L'invention a également pour objet un procédé de surveillance d'une zone d'intersection routière, le procédé étant mis en oeuvre par un dispositif électronique de surveillance et comprenant :
- la détection, via au moins un capteur, d'au moins un élément de trafic entrant dans la zone d'intersection routière, chaque capteur étant apte à être relié au module de détection et étant disposé en voirie à proximité de ladite zone d'intersection routière,
- le calcul d'au moins un indicateur d'accès associé à la zone d'intersection routière en fonction de la détection d'élément(s) de trafic entrant dans la zone d'intersection routière, et
- la transmission d'au moins un indicateur calculé à un véhicule automobile autonome en approche de la zone d'intersection routière.

L'invention a également pour objet un programme d'ordinateur comportant des instructions logicielles qui, lorsqu'elles sont exécutées par un ordinateur, mettent en oeuvre un procédé de surveillance, tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un dispositif électronique de surveillance selon l'invention, configuré pour surveiller une zone d'intersection routière,
- la figure 2 est une vue analogue à celle de la figure 1 selon un autre exemple de zone d'intersection routière,

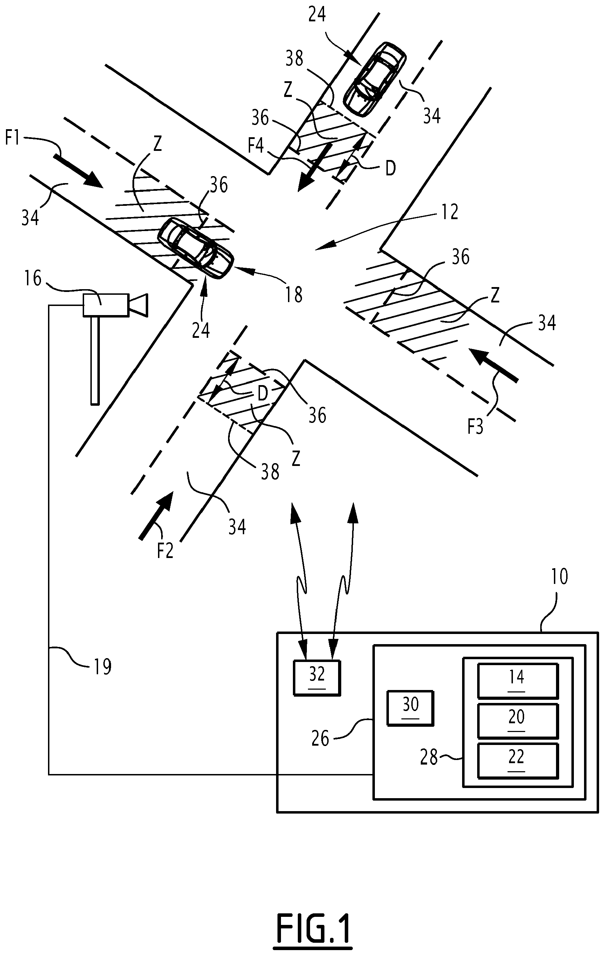

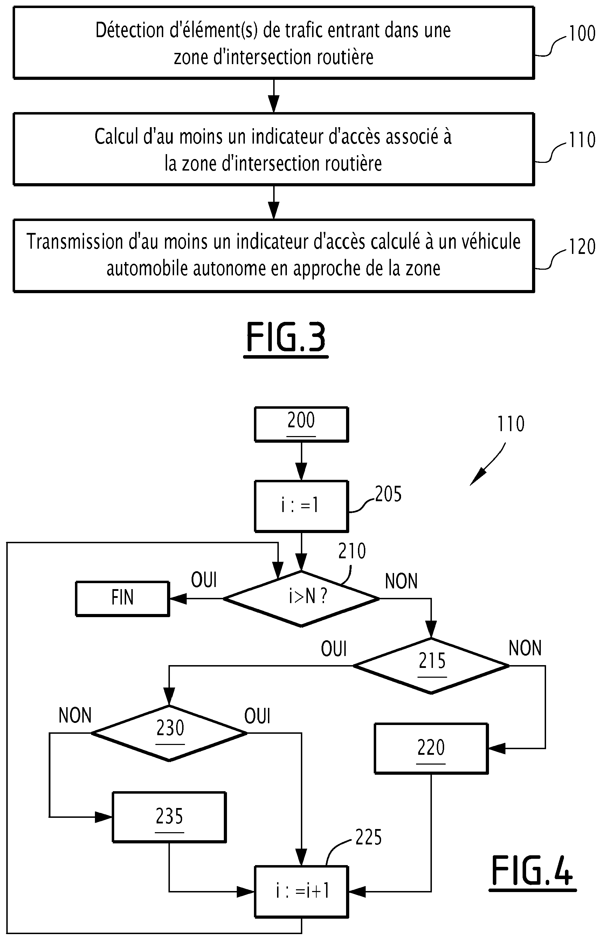

- la figure 3 est un organigramme d'un procédé, selon l'invention, de surveillance de la zone d'intersection routière, le procédé étant mis en oeuvre par le dispositif électronique de surveillance de la figure 1, et comprenant une étape de détection d'au moins un élément de trafic entrant dans la zone d'intersection routière, une étape de calcul d'au moins un indicateur d'accès associé à la zone d'intersection routière en fonction de la détection ou non d'élément(s) de trafic entrant dans ladite zone d'intersection routière, et une étape de transmission d'au moins un indicateur calculé à un véhicule automobile autonome en approche de la zone d'intersection routière, et
- la figure 4 est un logigramme représentant l'étape de calcul d'au moins un indicateur d'accès, du procédé de surveillance de la figure 3.

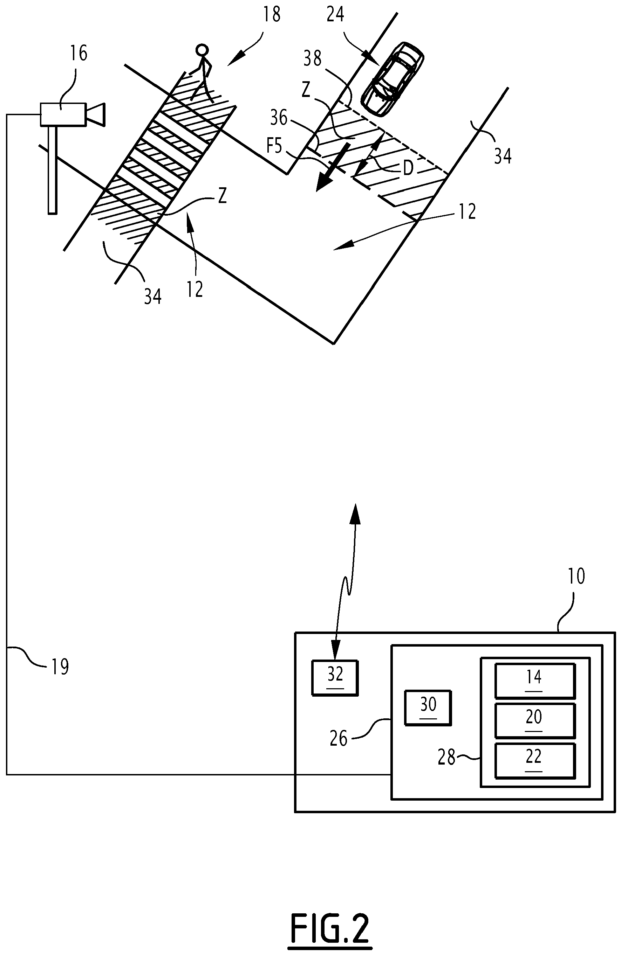

Sur les figures 1 et 2, un dispositif électronique de surveillance 10 est configuré pour surveiller une zone d'intersection routière 12. Le dispositif électronique de surveillance 10 comprend un module de détection 14 configuré pour détecter, via au moins un capteur 16, au moins un élément de trafic 18 entrant dans la zone d'intersection routière 12, chaque capteur 16 étant relié au module de détection 14, via une liaison filaire 19, comme illustré dans les exemples des figures 1 et 2, ou bien via une liaison sans-fil, non représentée, telle qu'une liaison radioélectrique. Chaque capteur 16 est disposé en voirie à proximité de ladite zone d'intersection routière 12.

Le dispositif électronique de surveillance 10 comprend en outre un module de calcul 20 configuré pour calculer au moins un indicateur d'accès associé à la zone d'intersection routière 12 en fonction de la détection ou non d'élément(s) de trafic 18 entrant dans la zone d'intersection routière 12.

Le dispositif électronique de surveillance 10 comprend également un module de transmission 22 configuré pour transmettre au moins un indicateur calculé à un véhicule automobile autonome 24 en approche de la zone d'intersection routière 12.

Dans l'exemple des figures 1 et 2, le dispositif électronique de surveillance 10 comprend une unité de traitement d'informations 26 formée par exemple d'une mémoire 28 et d'un processeur 30 associé à la mémoire 28. Le dispositif électronique de surveillance 10 comprend un émetteur-récepteur 32, configuré notamment pour émettre, sous forme d'ondes radioélectriques, les données transmises par le module de transmission 22 à destination du ou des véhicules automobiles autonomes 24 en approche de la zone d'intersection routière 12.

La zone d'intersection routière 12 comprend plusieurs voies d'accès 34. Chaque voie d'accès 34 est une voie de circulation, c'est-à-dire une voie permettant la circulation d'un élément de trafic 18, en particulier d'un véhicule automobile, tel qu'un véhicule automobile autonome 24, comme dans l'exemple de la figure 1, ou d'un piéton comme dans l'exemple de la figure 2, et permettant d'accéder à la zone d'intersection routière 12, c'est-à-dire d'entrer dans ladite zone 12. A chaque voie d'accès 34 pour véhicule(s) automobile(s), en particulier pour véhicule(s) automobile(s) autonome(s) 24, est associée une limite prédéfinie 36 d'entrée dans la zone d'intersection routière 12.

Dans l'exemple de la figure 1, la zone d'intersection routière 12 comprend quatre voies d'accès 34, les voies étant dans cet exemple des voies de circulation pour véhicule(s) automobile(s). La zone d'intersection routière 12 est, dans cet exemple, traversée par les quatre voies d'accès 34.

Dans l'exemple de la figure 2, la zone d'intersection routière 12 comprend deux voies d'accès 34, à savoir une voie de circulation pour véhicule(s) automobile(s) et une voie de circulation pour piéton(s), également appelée passage clouté. Dans cet exemple de la Figure 2, une limite prédéfinie d'entrée 36 est associée la voie d'accès 34 pour véhicule(s) automobile(s), tandis que la voie d'accès 34 pour piéton(s) est dépourvue de limite prédéfinie d'entrée.

A chaque voie d'accès 34, qu'il s'agisse d'une voie pour véhicule(s) automobile(s) ou pour piéton(s), est associée une zone de détection Z pour la détection d'élément(s) de trafic 18. La zone de détection Z est une zone dans laquelle un élément de trafic 18 est susceptible d'être détecté par le module de détection 14 comme un élément de trafic 18 entrant dans la zone d'intersection routière 12.

La zone de détection Z associée à une voie 34 est une zone de forme prédéfinie en 2 dimensions dans un plan de la voie 34, ou bien en 3 dimensions en tenant compte en outre d'une hauteur selon une direction perpendiculaire audit plan.

La zone de détection Z est par exemple en forme un polygone en 2 ou 3 dimensions, dont les coordonnées des sommets sont prédéfinies, comme illustré avec les voies 34 associées aux flèches F1 et F3 à la figure 1 ou avec la voie 34 pour piéton(s) à la figure 2.

En variante, la zone de détection Z associée à une voie 34 est une portion de ladite voie 34 située entre la limite d'entrée 36 et une distance prédéfinie D en amont de ladite limite d'entrée 36, l'élément de trafic 18 circulant d'amont en aval sur ladite voie 34, comme illustré avec les voies 34 associées aux flèches F2 et F4 à la figure 1 ou avec la voie 34 associée à la flèches F5 à la figure 2. L'homme du métier observera en outre que lesdites flèches F1 à F5 représentent en outre le sens de circulation, d'amont en aval, dans la voie 34 correspondante.

Dans l'exemple des figures 1 et 2, le module de détection 14, le module de calcul 20 et le module de transmission 22 sont réalisés chacun sous forme d'un logiciel, ou d'une brique logicielle, exécutables par le processeur 30. La mémoire 28 du dispositif électronique de surveillance 10 est alors apte à stocker un logiciel de détection configuré pour détecter, via au moins un capteur 16, au moins un élément de trafic 18 entrant dans la zone d'intersection routière 12, un logiciel de calcul configuré pour calculer au moins un indicateur d'accès associé à la zone d'intersection routière 12 en fonction de la détection ou non d'élément(s) de trafic 18 entrant dans la zone d'intersection routière 12 et un logiciel de transmission configuré pour transmettre au moins un indicateur calculé à un véhicule automobile autonome 24 en approche de la zone d'intersection routière 12. Le processeur 30 est alors apte à exécuter chacun des logiciels parmi le logiciel de détection, le logiciel de calcul et le logiciel de transmission.

En variante non représentée, le module de détection 14, le module de calcul 20 et le module de transmission 22 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif électronique de surveillance 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Dans l'exemple des figures 1 et 2, le module de détection 14, le module de calcul 20 et le module de transmission 22 sont embarqués au sein de l'unique unité de traitement d'informations 26, c'est-à-dire au sein d'un même et unique calculateur électronique.

En variante, non représentée, le module de détection 14 d'une part, et le module de calcul 20 et le module de transmission 22 d'autre part, sont embarqués au sein de deux calculateurs électroniques distincts et séparés.

Selon cette variante, le module électronique de détection 14 est par exemple disposé à proximité du ou des capteurs 16, en étant reliés à chacun des capteurs 16, par liaison filaire 19 ou radioélectrique. En complément facultatif, le module de détection 14 est par exemple intégré à un capteur 16 correspondant.

Selon cette variante, le module de calcul 20 et le module de transmission 22 sont alors par exemple disposés au sein d'un calculateur de supervision, positionné de manière plus éloignée du ou des capteurs 16. Le calculateur de supervision est par exemple une plateforme d'un centre de contrôle. En complément facultatif, le calculateur de supervision est connecté à plusieurs modules de détection 14, et le calcul du ou des indicateurs d'accès est alors effectué en fonction du ou des éléments de trafic entrant dans la zone d'intersection routière 12, détecté(s) par l'ensemble des modules de détection 14.

En complément, le module de transmission 22 est également configuré pour transmettre, au véhicule automobile autonome 24 en approche de la zone d'intersection routière 12, un indicateur d'accès ayant une valeur forcée, par exemple manuellement par un opérateur, au lieu de l'indicateur d'accès calculé par le module de calcul 20.

Le module de détection 14 est par exemple configuré pour détecter un élément de trafic 18 entrant dans la zone d'intersection routière 12, dès qu'un capteur 16 repère un élément de trafic 18 positionné à l'intérieur de la zone de détection Z associée à ladite voie 34.

Lorsque que la zone de détection Z est la portion de ladite voie 34 située entre la limite d'entrée 36 et la distance D en amont de ladite limite d'entrée 36, cette distance D est par exemple prédéfinie de manière respective pour chaque voie d'accès 34, et est alors susceptible de varier d'une voie d'accès 34 à l'autre. En variante, la distance D est identique pour toutes les voies d'accès 34 de la zone d'intersection routière 12.

Dans l'exemple des figures 1 et 2, un unique capteur 16 est associé à la zone d'intersection routière 12, cet unique capteur 16 supervisant la totalité de la zone d'intersection routière 12 et étant alors apte à détecter un élément de trafic 18 circulant sur n'importe quelle voie 34 à l'intérieur de la zone d'intersection routière 12, notamment à l'intérieur d'une zone de détection Z respective.

En variante non représentée, une pluralité de capteurs 16 est associée à la zone d'intersection routière 12.

Chaque capteur 16 est disposé en voirie à proximité de ladite zone d'intersection routière 12. Chaque capteur 16 est par exemple disposé le long d'une voie d'accès 34, ou encore dans la chaussée formant ladite voie d'accès 34.

Chaque capteur 16 est par exemple choisi parmi le groupe consistant en : une caméra vidéo dans le domaine visible, une caméra infrarouge, un LIDAR, un radar et un capteur intégré dans la chaussée, tel qu'un capteur électromagnétique, un capteur ultrasonique, ou encore un capteur à double détection, électromagnétique et ultrasonique.

Dans l'exemple des figures 1 et 2, le capteur 16 est une caméra vidéo dans le domaine visible, dont le champ de vue, également appelé FOV (de l'anglais *Field Of View*), couvre l'intégralité de la zone d'intersection routière 12.

L'homme du métier comprendra de manière générale que lorsque le capteur 16 est une caméra, celle-ci est choisie et positionnée de manière à ce que l'intégralité de la zone d'intersection routière 12 soit couverte par le ou les champs de la ou des caméras. De manière analogue, lorsque le capteur 16 est un LIDAR ou un radar, le nombre de capteurs 16 est choisi en adéquation avec le nombre de voies d'accès 34, et les capteurs 16 sont positionnés, comme connu en soi, afin de couvrir l'intégralité de la zone d'intersection routière 12, notamment chaque zone de détection Z. De manière analogue encore, lorsque le capteur 16 est un capteur intégré dans la chaussée, tel qu'un magnétomètre, un capteur électromagnétique, un capteur à ultrasons ou encore un capteur à double détection combinant une détection électromagnétique et une détection ultrasonique, un capteur 16 respectif est associé à chaque zone de détection Z.

Chaque capteur 16 est alors apte à repérer un ou plusieurs éléments de trafic se trouvant dans une zone de détection Z respective pour une voie d'accès 34. Chaque capteur 16 est en outre, pour chaque élément de trafic 18 repéré, apte à déterminer une position dudit élément de trafic 18, telle que sa position instantanée, et à mesurer une vitesse dudit élément de trafic 18, telle que sa vitesse instantanée.

Chaque élément de trafic 18 est un élément apte à circuler et/ou à traverser une voie 34 respective. Chaque élément de trafic 18 est en particulier un élément apte à se trouver dans une zone de détection Z respective.

Chaque élément de trafic 18 est par exemple choisi parmi le groupe consistant en : un véhicule motorisé, un véhicule non-motorisé, un piéton et un animal.

Le module de calcul 20 est configuré pour calculer au moins un indicateur d'accès associé à la zone d'intersection routière 12 en fonction de la détection ou non, par le module de détection 14, d'élément(s) de trafic 18 entrant dans la zone d'intersection routière 12.

Le module de calcul 20 est par exemple configuré pour positionner chaque indicateur d'accès à une valeur d'accès autorisé tant qu'aucun élément de trafic 18 entrant dans la zone d'intersection routière 12 n'est détecté par le module de détection 14.

Le module de calcul 20 est par exemple configuré pour calculer un indicateur d'accès pour chaque limite d'entrée 36. Le module de calcul 20 est alors par exemple configuré pour positionner, à une valeur d'accès interdit, un indicateur d'accès associé à une limite d'entrée 36 d'une voie 34 respective, dès la détection d'un élément de trafic 18 positionné à l'intérieur de la zone de détection Z associée à une voie sécante de ladite voie respective.

Autrement dit, dès qu'un élément de trafic 18 entrant en une zone de détection Z respective est détecté par le module de détection 14, ladite détection étant transmise par le module de détection 14 au module de calcul 20, le module de calcul 20 positionne alors, à la valeur d'accès interdit, l'indicateur d'accès associé au(x) limite(s) d'entrée 36 de la ou de toutes les voies 34 qui sont sécantes à la voie 34 pour laquelle un élément de trafic entrant 18 a été détecté en sa limite d'entrée 36.

Chaque indicateur d'accès présente par exemple une valeur égale à accès interdit ou bien à accès autorisé. Lorsque l'indicateur d'accès est susceptible de prendre uniquement ces deux valeurs, sa valeur est par exemple codée sous forme d'un bit, avec la valeur 0 correspondant par convention à un accès interdit à la zone d'intersection routière 12 et la valeur 1 correspondant à un accès autorisé à la zone d'intersection routière 12.

En complément facultatif, chaque indicateur d'accès présente plus de deux valeurs et a alors des valeurs complémentaires par rapport aux deux valeurs précitées, par exemple afin d'informer le véhicule automobile autonome 24 d'un accès autorisé sous restriction.

Selon ce complément facultatif, chaque indicateur d'accès présente par exemple une valeur choisie parmi le groupe consistant en : accès interdit, accès autorisé, accès autorisé avec limitation spécifique de vitesse et accès autorisé avec indication d'un danger potentiel. L'indication d'un danger potentiel est par exemple une indication de travaux, une indication d'un véhicule se trouvant sur le bas-côté, etc... L'homme du métier comprendra alors que dans cet exemple, la valeur d'accès autorisé, sans précision complémentaire, correspond à un accès autorisé sans restriction particulière, c'est-à-dire sans restriction autres que celles inhérentes au code de la route du pays concerné.

En complément facultatif, le module de calcul 20 est en outre configuré pour calculer, pour chaque indicateur d'accès ayant la valeur d'accès interdit, une temporisation respective. La durée de cette temporisation est par exemple une valeur prédéfinie, telle qu'une valeur comprise entre 10 secondes et 2 minutes.

Selon ce complément facultatif, le calcul de la temporisation associée à chaque indicateur d'accès ayant la valeur d'accès interdit permet d'équilibrer les temps d'arrêt des véhicules automobiles autonomes 24 aux entrées de la zone d'intersection routière 12, notamment lorsque la densité du trafic automobile est élevée.

Le module de transmission 22 est configuré pour transmettre au moins un indicateur d'accès à un véhicule automobile autonome 24 en approche de la zone d'intersection routière 12.

Le module de transmission 22 est par exemple configuré pour regrouper l'ensemble d'indicateur(s) d'accès dans un fichier commun, également appelé container, et pour diffuser ledit fichier commun au(x) véhicule(s) automobile(s) autonome(s) 24 en approche de la zone d'intersection routière 12.

Cette transmission du ou des indicateurs d'accès de manière diffusée permet alors de faciliter la transmission des indicateurs d'accès par le module de transmission 22, chaque véhicule automobile autonome 24 destinataire étant alors apte à filtrer les informations contenues dans le fichier commun reçu, afin de ne prendre en compte que l'indicateur d'accès le concernant, c'est-à-dire l'indicateur d'accès associé à la voie d'accès 34 sur laquelle il se trouve.

En variante, le module de transmission 22 est configuré pour transmettre, de manière individualisée et à chaque véhicule automobile autonome 24 en approche de la zone d'intersection routière 12, l'indicateur d'accès le concernant, c'est-à-dire l'indicateur d'accès associé à la voie d'accès 34 sur laquelle se trouve ledit véhicule automobile autonome 24.

Le fichier commun est par exemple conforme au protocole SPaT (de l'anglais *Signal Phase and Timing).*

Chaque véhicule automobile autonome 24 présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*)*.*

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 24. Selon ce niveau 3, un système de gestion de la conduite autonome, embarqué à bord du véhicule automobile autonome 24, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 24, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 24, effectue la conduite dynamique latérale et longitudinale dans toutes les situations rencontrées par le véhicule automobile autonome 24, pendant tout son trajet. Aucun conducteur n'est alors requis.

L'homme du métier comprendra en outre que, selon l'invention, un véhicule automobile autonome 24 en approche de la zone d'intersection routière 12 sera autorisé à entrer dans ladite zone d'intersection routière 12 seulement s'il a reçu un indicateur d'accès n'ayant pas la valeur d'accès interdit.

La transmission du ou des indicateurs d'accès à chaque véhicule automobile autonome 24 est par exemple effectuée selon un protocole de communication conforme à la norme Wi-Fi, et/ou à la norme LTE (de l'anglais *Long Term Evolution*), ou encore selon le protocole Ethernet. L'émetteur-récepteur 32, associé au module de transmission 22 pour la transmission du ou de ces indicateurs sous forme d'ondes radioélectriques, est alors de manière analogue conforme à la norme Wi-Fi, et/ou à la norme LTE. L'émetteur-récepteur 32 est plus généralement conforme à une ou plusieurs normes de radiocommunication à moyenne ou longue distance, telle qu'une norme de radiocommunication permettant la transmission d'informations sur une distance supérieure ou égale à 50 m, de préférence sur une distance supérieure ou égale à 100 m.

Chaque voie d'accès 34 s'étend selon un axe d'extension, et deux voies d'accès 34 sont sécantes lorsque leur axes d'extension sont eux-mêmes sécants, c'est-à-dire se croisent, ou encore se coupent en un point. Autrement dit, deux voies d'accès 34 sécantes se croisent.

Chaque limite d'entrée 36 est également appelée frontière d'entrée et délimite alors une entrée dans la zone d'intersection routière 12 correspondante. Chaque limite d'entrée 36 est également appelée point d'accès, au sens large de la notion de point d'accès, la limite d'entrée 36 n'étant généralement pas ponctuelle, mais plutôt en forme d'un segment de droite ou d'un segment de courbe.

A titre d'exemple, sur la figure 1, les voies d'accès 34 qui sont sécantes de la voie d'accès 34 associé à la flèche F1 sont les voies d'accès 34 associées respectivement aux flèches F2 et F4. Les voies d'accès 34 associées respectivement aux flèches F1 et F3 sont considérées comme parallèles l'une de l'autre et ne sont alors pas sécantes l'une de l'autre. De même, les voies d'accès 34 associées respectivement aux flèches F2 et F4 sont considérées comme parallèles l'une de l'autre et ne sont alors pas sécantes l'une de l'autre.

La position de chaque limite d'entrée 36, ainsi qu'en complément facultatif de chaque limite amont 38, est par exemple définie par des coordonnées GPS (de l'anglais *Global Positioning System*)*,* telles que les coordonnées GPS des extrémités d'un segment correspondant, formant ladite limite 36, 38.

L'homme du métier comprendra que la limite d'entrée 36, représentée en trait discontinu sur la figure 1 ou sur la figure 2, et la limite amont 38, représentée en trait pointillé sur la figure 1 ou sur la figure 2, sont chacune des limites prédéfinies, dont la position est connue, mais ne correspondent pas nécessairement à un marquage au sol sur la chaussée de la voie d'accès 34 associée. La limite d'entrée 36, ainsi qu'en complément facultatif la limite amont 38, sont alors considérées comme des limites virtuelles.

Le fonctionnement du dispositif électronique de surveillance 10 selon l'invention va désormais être expliqué à l'aide de la figure 3 représentant un organigramme du procédé, selon l'invention, de surveillance de la zone d'intersection routière 12, le procédé étant mis en oeuvre par le dispositif électronique de surveillance 10.

Lors d'une étape initiale 100, le dispositif de surveillance 10 détecte, via son module de détection 14, l'ensemble d'éventuel(s) élément(s) de trafic 18 entrant dans la zone d'intersection routière 12.

Comme indiqué précédemment, cette détection d'éventuel(s) élément(s) de trafic 18 entrant est effectuée à l'aide du ou des capteurs 16 reliés au module de détection 14, ces capteurs 16 étant disposés en voirie à proximité de la zone d'intersection routière 12 et n'étant pas embarqués à bord d'un véhicule automobile autonome 24 respectif.

Lors de cette étape de détection 100, le dispositif de surveillance 10 détecte par exemple un élément de trafic 18 positionné à l'intérieur de la zone de détection Z associée à une voie 34 respective dès qu'un capteur 16 correspondant repère un élément de trafic 18 sur ladite voie 34 positionné à l'intérieur de la zone de détection Z, par exemple à au plus la distance prédéfinie D en amont de ladite limite d'entrée 36, l'élément de trafic 18 circulant d'amont en aval sur ladite voie 34.

Dans l'exemple de la figure 1, le véhicule automobile autonome 24 se déplaçant selon la flèche F1 est en cours de franchissement de la limite d'entrée 36 et positionné à l'intérieur de la zone de détection Z associée à la voie 34 sur laquelle il circule. Il est alors détecté comme un élément de trafic 18 entrant dans la zone d'intersection routière 12.

En revanche, le véhicule automobile autonome 24 se déplaçant selon la flèche F4 n'est pas positionné à l'intérieur de la zone de détection Z associée à la voie 34 sur laquelle il circule, et en particulier n'a pas encore franchi la limite amont 38 associée à la voie 34 sur laquelle il circule. Il n'est donc pas détecté comme un élément de trafic 18 entrant dans la zone d'intersection routière 12.

Le dispositif de surveillance 10 calcule ensuite, lors de l'étape suivante 110 et via son module de calcul 20, au moins un indicateur d'accès associé à la zone d'intersection routière 12 en fonction de la détection ou non, lors de l'étape initiale 100, d'élément(s) de trafic 18 entrant dans la zone d'intersection routière 12. Cette étape de calcul 110 sera décrite plus en détail par la suite, en regard du logigramme de la figure 4.

Le dispositif de surveillance 10 transmet enfin, lors de l'étape suivante 120 et via son module de la transmission 22, au moins un indicateur d'accès à un véhicule automobile autonome 24 en approche de la zone d'intersection routière 12.

Lors de cette étape de transmission 120, le module de transmission 22 regroupe par exemple l'ensemble d'indicateur(s) d'accès dans un fichier commun correspondant, puis diffuse ce fichier commun au(x) véhicule(s) automobile(s) autonome(s) 24 en approche de la zone d'intersection routière 12, ceci pour une transmission efficace et simplifiée des indicateurs d'accès.

L'étape 110 de calcul du ou des indicateurs d'accès associés à la zone d'intersection routière 12 va être à présente décrite plus en détail en regard de la figure 4.

Lors d'une sous-étape 200, le module de calcul 20 reçoit, de la part du module de détection 14, l'ensemble d'éventuel(s) élément(s) de trafic 18 entrant dans la zone d'intersection routière 12, détecté(s) lors de l'étape de détection 100.

Cet ensemble d'élément(s) de trafic 18 entrant(s) détecté(s) est par exemple transmis sous forme d'une liste, de la part du module de détection 14 à destination du module de calcul 20. L'homme du métier comprendra bien entendu que si aucun élément de trafic 18 entrant dans la zone d'intersection routière 12 n'a été détecté lors de l'étape de détection 100, alors ledit ensemble, ou encore ladite liste, est vide.

Le module de calcul 20 initialise ensuite, lors de la sous-étape 205, un indice de limite d'entrée i à la valeur 1, l'indice de limite d'entrée i étant un indice entier de valeur comprise entre 1 et N, permettant d'identifier chaque limite d'entrée 36 parmi la pluralité de limites d'entrée 36 associées à la zone d'intersection routière 12. Par convention, l'indice de limite d'entrée i est incrémenté d'une unité d'une limite d'entrée 36 à l'autre. Dans l'exemple de la figure 1, la limite d'entrée 36 associée à la flèche F1 est par exemple identifiée par l'indice de limite d'entrée i égal à 1, celle associée à la flèche F2 par l'indice de limite d'entrée i égal à 2, et ainsi de suite. N représente le nombre total de limites d'entrée 36 associées à la zone d'intersection routière 12, et est par exemple égal à 4 dans l'exemple de la figure 1.

Le module de calcul 20 teste ensuite, lors de la sous-étape 210, si la valeur de l'indice de limite d'entrée i est strictement supérieure à N, auquel cas toutes les limites d'entrée 36 associées à la zone d'intersection routière 12 ont été prises en compte, et l'étape de calcul 110 est alors terminée.

Sinon, c'est-à-dire si la valeur de l'indice de limite d'entrée i est inférieure ou égale à N, alors le module de calcul 20 passe à la sous-étape 215, lors de laquelle il détermine, à partir de l'ensemble, ou liste, reçu lors de la sous-étape 200, si un élément de trafic 18 entrant a été détecté pour la limite d'entrée 36 d'indice i.

Si aucun élément de trafic 18 entrant n'a été détecté pour cette limite d'entrée 36 d'indice i, alors le module de calcul 20 positionne, lors de la sous-étape 220, à la ou à l'une des valeurs d'accès autorisé, chaque indicateur d'accès associé à une limite d'entrée 36 d'une voie 34 qui est sécante de celle pour laquelle aucun élément de trafic 18 entrant n'a été détecté en cette limite d'entrée 36 d'indice i. Le module de calcul 20 incrémente ensuite, lors de la sous-étape 225, la valeur de l'indice de limite d'entrée i d'une unité, avant de retourner à la sous-étape 210 pour tester si la valeur de l'indice de limite d'entrée i, incrémentée d'une unité, est alors strictement supérieure à N.

Si, lors de la sous-étape 215, le module de calcul 20 a déterminé au contraire qu'au moins un élément de trafic 18 entrant a été détecté pour cette limite d'entrée 36 d'indice i, alors le module de calcul 20 passe à la sous-étape 230. Lors de la sous-étape 230, il teste si la valeur de l'indicateur d'accès associé à cette limite d'entrée 36 d'indice i est égale ou non à la valeur d'accès interdit.

Si la valeur de l'indicateur d'accès associé à cette limite d'entrée 36 d'indice i est égale à accès interdit, alors le module de calcul 20 passe à la sous-étape 225 au cours de laquelle il incrémente la valeur de l'indice de limite d'entrée i d'une unité, avant de retourner à la sous-étape 210.

Si au contraire la valeur de l'indicateur d'accès associé à cette limite d'entrée 36 d'indice i est égale à la ou à l'une des valeurs d'accès autorisé, et n'est donc pas égale à la valeur d'accès interdit, alors le module de calcul 20 passe à la sous-étape 235 au cours de laquelle il positionne, à la valeur d'accès interdit, chaque indicateur d'accès associé à une limite d'entrée 36 d'une voie 34 qui est sécante de celle pour laquelle au moins un élément de trafic 18 entrant a été détecté en cette limite d'entrée 36 d'indice i.

A la fin de la sous-étape 235, le module de calcul 20 passe à la sous-étape 225 au cours de laquelle il incrémente la valeur de l'indice de limite d'entrée i d'une unité, avant de retourner à la sous-étape 210.

L'étape de calcul 110 se termine lorsque la valeur de l'indice de limite d'entrée i devient strictement supérieure à N, suite à ces incrémentations successives d'une unité lors de chaque itération de la sous-étape 225.

Dans l'exemple de la figure 1, le véhicule automobile autonome 24 se déplaçant selon la flèche F1 est en cours de franchissement de la limite d'entrée 36 et positionné à l'intérieur de la zone de détection Z associée à la voie 34 sur laquelle il circule. Il est alors détecté comme un élément de trafic 18 entrant pour la limite d'entrée 36 d'indice i égal à 1. Au cours de l'étape de calcul 110, lors de la première mise en oeuvre de la sous-étape 215, le test est alors positif, et le module de calcul 20 passe donc à la sous-étape 230 au cours de laquelle il détermine que la valeur de l'indicateur d'accès associé à cette limite d'entrée 36 d'indice 1 est égale à une valeur d'accès autorisé. Dès lors, au cours de la sous-étape 235, le module de calcul 20 positionne, à la valeur d'accès interdit, chaque indicateur d'accès associé à une limite d'entrée 36 d'une voie 34 qui est sécante de celle pour laquelle au moins un élément de trafic 18 entrant a été détecté en cette limite d'entrée 36 d'indice 1. Autrement dit, lors de la sous-étape 235, le module de calcul 20 positionne, à la valeur d'accès interdit, l'indicateur d'accès associé à la limite d'entrée 36 d'indice 2 (correspondant à la flèche F2) et celui associé à la limite d'entrée 36 d'indice 4 (correspondant à la flèche F4).

Le véhicule automobile autonome 24 se déplaçant selon la flèche F4, et approchant de la limite d'entrée 36 associée à la voie 34 sur laquelle il circule, recevra ainsi, lors de l'étape de transmission 120, l'indicateur d'accès égal à accès interdit pour cette limite d'entrée 36 d'indice i égal à 4. Le véhicule automobile autonome 24 se déplaçant selon la flèche F4 s'arrêtera par conséquent avant cette limite d'entrée 36 d'indice 4 associée à la voie 34 sur laquelle il circule.

La surveillance de la zone d'intersection routière 12 selon l'invention permet alors d'éviter une collision entre le véhicule automobile autonome 24 se déplaçant selon la flèche F1 qui est déjà entré dans la zone d'intersection routière 12 et celui se déplaçant selon la flèche F4 sur le point d'entrer dans la zone d'intersection routière 12, sans nécessiter pour autant l'utilisation de capteur(s) embarqué(s) à bord du ou desdits véhicules automobiles autonomes 24.

On conçoit alors que le dispositif électronique 10 selon l'invention et le procédé associé de surveillance de la zone d'intersection routière 12 à destination de véhicule(s) automobile(s) autonome(s) 24, permettent, via des calculs moins complexes, de limiter davantage les risques de collision à l'intérieur de la zone d'intersection routière 12, tout en ne nécessitant pas la mise en oeuvre de capteur(s) embarqué(s) à bord du ou desdits véhicules automobiles autonomes 24.

## Revendications

1. Dispositif électronique (10) de surveillance d'une zone d'intersection routière (12), le dispositif (10) comprenant :
- un module de détection (14) configuré pour détecter, via au moins un capteur (16), au moins un élément de trafic (18) entrant dans la zone d'intersection routière (12), chaque capteur (16) étant apte à être relié au module de détection (14) et étant disposé en voirie à proximité de ladite zone d'intersection routière (12),
**caractérisé en ce que** le dispositif (10) comprend en outre :
- un module de calcul (20) configuré pour calculer au moins un indicateur d'accès associé à la zone d'intersection routière (12) en fonction de la détection d'élément(s) de trafic (18) entrant dans la zone d'intersection routière (12),
- un module de transmission (22) configuré pour transmettre au moins un indicateur calculé à un véhicule automobile autonome (24) en approche de la zone d'intersection routière (12).

2. Dispositif (10) selon la revendication 1, dans lequel le module de calcul (20) est configuré pour positionner chaque indicateur d'accès à une valeur d'accès autorisé tant qu'aucun élément de trafic (18) entrant dans la zone d'intersection routière (12) n'est détecté.

3. Dispositif (10) selon la revendication 1 ou 2, dans lequel la zone d'intersection routière (12) comprend plusieurs voies d'accès (34), et à chaque voie d'accès (34) pour véhicule(s) automobile(s), en particulier pour véhicule(s) automobile(s) autonome(s) (24), est associée une limite prédéfinie (36) d'entrée dans la zone d'intersection routière (12), et
dans lequel le module de calcul (20) est configuré pour calculer un indicateur d'accès pour chaque limite d'entrée (36).

4. Dispositif (10) selon la revendication 3, dans lequel le module de calcul (20) est configuré pour positionner, à une valeur d'accès interdit, un indicateur d'accès associé à une limite d'entrée (36) d'une voie respective (34) dès la détection d'un élément de trafic (18) positionné à l'intérieur d'une zone de détection (Z) associée à une voie (34) sécante de ladite voie respective (34).

5. Dispositif (10) selon la revendication 4, dans lequel la zone de détection (Z) associée à une voie (34) est une zone prédéfinie en 2 ou 3 dimensions,
de préférence en forme d'un polygone.

6. Dispositif (10) selon l'une quelconque des revendications précédentes, dans lequel le module de transmission (22) est configuré pour regrouper l'ensemble d'indicateur(s) calculé(s) dans un fichier commun et pour diffuser ledit fichier commun au(x) véhicule(s) automobile(s) autonome(s) (24) en approche de la zone d'intersection routière (12).

7. Dispositif (10) selon l'une quelconque des revendications précédentes, dans lequel chaque indicateur d'accès présente une valeur choisie parmi le groupe consistant en : accès interdit, accès autorisé, accès autorisé avec limitation spécifique de vitesse, accès autorisé avec indication d'un danger potentiel.

8. Dispositif (10) selon l'une quelconque des revendications précédentes, dans lequel chaque véhicule automobile autonome (24) présente un niveau d'automatisation supérieur ou égal à 3 selon le barème de l'Organisation Internationale des Constructeurs Automobiles.

9. Procédé de surveillance d'une zone d'intersection routière (12), le procédé étant mis en oeuvre par un dispositif électronique de surveillance (10) et comprenant :
- la détection (100), via au moins un capteur (16), d'au moins un élément de trafic (18) entrant dans la zone d'intersection routière (12), chaque capteur (16) étant apte à être relié au module de détection (14) et étant disposé en voirie à proximité de ladite zone d'intersection routière (12),
**caractérisé en ce que** le procédé comprend en outre :
- le calcul (110) d'au moins un indicateur d'accès associé à la zone d'intersection routière (12) en fonction de la détection d'élément(s) de trafic (18) entrant dans la zone d'intersection routière (12),
- la transmission (120) d'au moins un indicateur calculé à un véhicule automobile autonome (24) en approche de la zone d'intersection routière (12).

10. Programme d'ordinateur comportant des instructions logicielles qui, lorsqu'elles sont exécutées par un ordinateur, mettent en oeuvre un procédé selon la revendication précédente.
